# EUROPEAN PATENT APPLICATION

(11) **EP 0 598 673 A1**
(43) Date of publication of application: **25.05.1994**
(21) Application number: 93480164.8
(22) Date of filing: 19.10.1993
(51) Int. Cl.: G06F 9/46

(54) **Method of and apparatus for providing a client/server architecture**

(30) Priority: 19.11.1992 US 978647
(71) Applicant: INTERNATIONAL BUSINESS MACHINES CORPORATION, Armonk, N.Y. 10504 (US)
(72) Inventor: Shriver, David I., Euless, TX 76039 (US)
(74) Representative: de Pena, Alain

(57) **Abstract**

An improved client / server architecture in which a server runs as part of the client's task, subtask or process when processing a request for a client. The present invention causes the server, while still appearing logically and functionally the same to the client, to temporarily run as an extension of the client, while the server is servicing a request for the client. This may be accomplished by preserving the state of the server (by saving the registers and critical storage pointers) at the point that the server is ready to accept a new work request. This state information for the server may be accessed and used later by the client to transfer control to the server code, to resume the server's operation. The client's request may then be passed as arguments (parameters) on the call. Unlike message passing, this does not necessarily involve data transfer, as only the address of the request data may be passed.

## Description

### Technical Field of the Invention

This invention relates in general to data processing systems, and in particular to a method of, and apparatus for, providing a client / server architecture.

### Background of the Invention

The client / server method of software organization is established in the computer programming arts. Existing client / server programming is generally recognized as consisting of independent client (requestor) and server software routines, running under separate tasks (or processes), that communicate with each other using communication or message passing protocols to pass requests for work to be performed by servers for clients or requestors, and to communicate the response to these requests (if any), back to their respective client or requestor.

A client / server is distinguishable from the situation where a conventional program calls another program as a sub-program (or a subroutine).

Using a conventional program structure, the called program is entered, performs the needed processing and then ends. The program may be re-entrant, serially re-useable or non-reentrant, and the program itself may reside in shared storage or non-shared storage. If the program is re-entrant, each caller is allocated one or more areas of working storage for that caller's private use. It is generally not acceptable for multiple concurrent callers to share the same working storage at the same time, as they will likely destructively interfere with each other's variables, causing incorrect results.

The conventional flow of a conventional computer sub-program is :
1) allocate any needed working storage ;
2) perform processing;
3) free any allocated working storage; and
4) exit the program (usually returning to the caller).

Using a client / server computing structure, what is described as the calling program above, is now called a client. The program that processes the request of a client is called a server. Programs that make up a client / server computing system, are organized differently than the conventional program structure. Rather than a client directly calling a server, a system routine is called to pass a request to a server. Another major difference is that the server programs do not logically function as the sub-programs of their clients, but are rather separate, usually long-running, concurrent programs. The major distinctions between conventional program/sub-program structure and client/server program structure are that : 1) the life of a server program usually lasts across multiple client requests; and 2) A server may use common, persistent storage for its working storage. That is each request received by a server does not require its own separate working storage, as the server serializes and controls proper access to its own working storage.

The standard flow of a server computer program is :
1) Perform one-time initialization (usually the allocation of working storage and initialization of variables);
2) Loop (until the server is stopped) processing client requests as follows:
   a) Wait on a request from a client,
   b) Process client's request, and
   c) Communicate any result to the client;
3) If the server is stopped, free working storage and exit.

Such a client / server architecture may provide several advantages. A client / server architecture may provide a simpler, more logical organization of software function in which the software function may be separated based on the concept of service and the requesting of such service. Such separation or encapsulation of service may encourage implementation independence and portability. The separation may also provide both horizontal and vertical scalability. In horizontal scaling, server capability may be altered by adding or removing clients. In vertical scaling, a server capability may be altered by migrating the server to a higher performance environment or by adding multiple servers.

Although the use of client / server computing has increased due to these advantages, there are disadvantages associated with it as well. These disadvantages may hinder its usefulness in some environments. One of them ore critical of these problems is reduced performance. There is a substantial performance overhead associated with a conventional client / server implementation, as compared to a traditional program / sub-program implementation. This is largely due to existing server programs running under their own separate tasks or processes.

Separate server tasks may require additional operating system overhead to manage these tasks and the task switching. Separate server tasks may also result in additional operating system overhead due to the required inter-process communication. This inter-process communication consists of requests from client programs to server programs, and responses from server programs to client programs, passing via some message protocol, which is more inefficient than traditional program / sub-program parameter passing.

The combination of the task switching and inter-process communication may result in longer code path lengths and more movement of request and response data.

In addition to the performance problems, separate server tasks may also result in system administration problems. Among these are system security and system accounting. System security concerns may have to be addressed if the separate client and server tasks have different authority or access privileges to various system resources. System accounting may be more complex is the use of system resources by a server has to be allocated to each client serviced.

Thus, existing systems provide no method of, or apparatus for, providing a client / server architecture without the system overhead disadvantages of existing systems. As such, there is a need for a method of, and apparatus for, providing a client / server architecture without the system overhead disadvantages of existing systems.

### Summary of the invention

The invention disclosed herein comprises a method of, and apparatus for, providing a client / server architecture. The method and apparatus described herein substantially eliminate or reduce the difficulties of existing systems which provide a client / server architecture.

In accordance with the present invention, a server runs as part of the client's task, subtask or process when processing a request for a client. The present invention causes the server, while still appearing logically and functionally the same to the client, to temporarily run as an extension of the client, while the server is servicing a request for the client. This may be accomplished by preserving the state of the server (by saving the registers and critical storage pointers) at the point that the server is ready to accept a new work request. This state information for the server may be accessed and used later by the client to transfer control to the server code, to resume the server's operation. The client's request may then be passed as arguments (parameters) on the call. Unlike message passing, this does not necessarily involve data transfer, as only the address of the request data may be passed.

The present invention has the advantage of providing an improved data processing system.

The present invention has the further advantage of providing an improved client / server architecture.

The present invention has the further advantage of providing a more efficient method of client / server operation as there is reduced task switching and inter-process communication involved. A more efficient direct program to program transfer of control with parameter passing as arguments results in a shorter code path length and less movement of request and response data.

The present invention has the further advantage of providing improved security as the server, when it is running as part of the client tasks, inherits the same authority as the client. This assumes that security authorization for access to resources is managed on a client by client (or task by task) basis.

The present invention has the further advantage of simplifying and reducing system accounting overhead as any resources used by the server may be automatically reflected in the totals of the client task that the server is servicing.

The present invention has the further advantage that the server may assume operating characteristics of the client task, while the server is part of the client task. These operating characteristics may include system priority or system resource ownership.

The present invention has the further advantage of providing improved recovery. In some operating environments, a task may be backed out if it fails. That is, the resources that were modified by the task are restored to their previous state. By having the server run under the client task, if the server fails, only the resources modified by that (client) task would be backed out to their previous value. If the server was running as a separate task, all resources since the server started would be backed out, unless recovery synchronization points were specified after every client request.

### Brief Description of the Drawings

For a more complete understanding of the present invention and the advantages thereof, reference is now made to the Detailed Description in conjunction with the attached Drawings in which :
Figure 1 is a block diagram of a data processing system used in performing the method of the present invention and forming part of the apparatus of the present invention; and
Figure 2 is a flowchart illustrating the operations preferred in carrying out the present invention.

### Detailed Description of the Invention

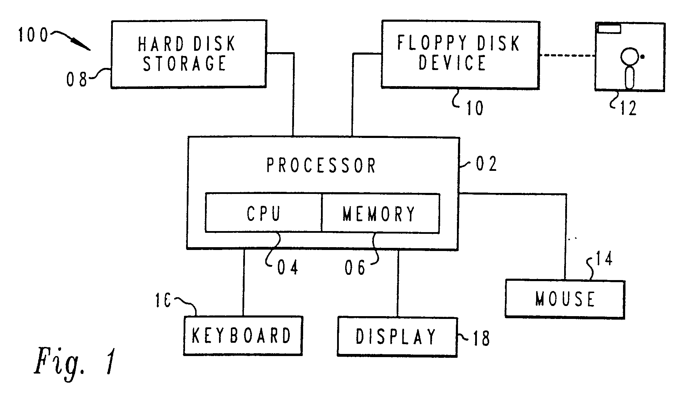

Referring first to Figure 1, there is shown in block diagram form, a data processing system 100 according to the present invention. The data processing system 100 includes a processor 02, which includes a central processing unit (CPU) 04, and a memory 06. Additional memory, in the form of a hard disk file storage 08 and a floppy disk device 10, is connected to the processor 02. Floppy disk device 10 receives a diskette 12 which has computer program code recorded thereon that implements the present invention in the data processing system 100. The data processing system 100 may include user interface hardware, including a mouse 14 and a keyboard 16 for allowing user input to the processor 02 and a display 18 for presenting visual data to the user.

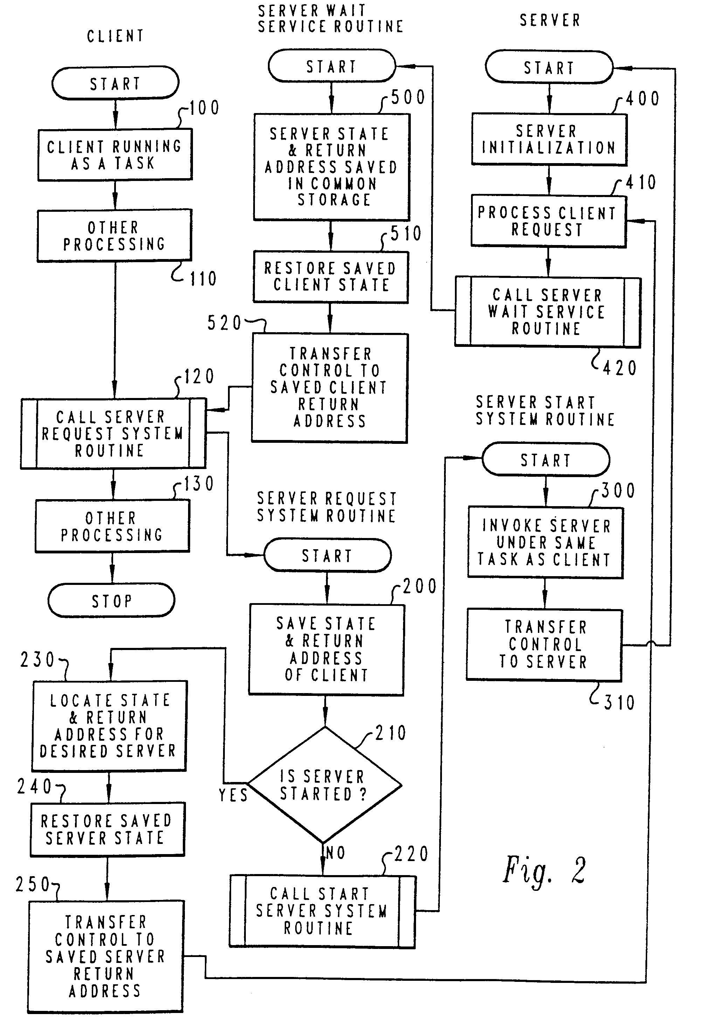

Referring now to figure 2, a flowchart illustrating operations preferred in carrying out the present invention are shown. In the flowcharts, the graphical conventions of a diamond for a test or decision and a rectangle for a process or function are used. These conventions are well understood by those skilled in the art, and the flowcharts are sufficient to enable one of ordinary skill to write code if any suitable computer programming language.

Referring now to figure 2, after the start of the client, the client is running under a client task (or subtask or process) in process block 100. Thereafter, in process block 110, the client may be performing processing other than making a request to the server. Thereafter, process block 120 makes a client request by issuing a call to a Server Request System Routine. The Server Request System Routine executes under the same task as the client (the client task).

Thereafter, control transfers to the start of the Server Request System Routine. After the start of the Server Request System Routine, process block 200 saves in common storage a state and return address of the client. The state of the client is a state at which the client is awaiting a response from the server. Common storage refers to shared storage that is persistent across task invocations and is accessible by the client / server service routines executing under multiple tasks. Thereafter, decision block 210 determines if the server is already started. If the server is not already stared, then process block 220 issues a call to Server Start System Routine. The Server Start System Routine executes under the same task as the client (the client task).

Thereafter, control transfers to the start of the Server Start System Routine. After the start of the Server Start System Routine, process block 300 invokes the server under the same task as the client (the client task). Thereafter, process block 310 transfers control to the server.

Thereafter, control transfers to the start of the server. After the start of the server, process block 400 performs any initialization required by the server. This initialization may include allocation of persistent working storage. Persistent working storage is storage that persists beyond the life of the client task. Thereafter, process block 410 processes the client request. Thereafter, process block 420 calls a Server Wait Service Routine. The Server Wait Service Routine executes under the same task as the client (the client task).

Thereafter, control transfers to the start of the Server Wait Service Routine. After the start of the Server Wait Service Routine, process block 500 saves in common storage a state and return address of process block 410 of the Server. The state of the server is a state at which the server is awaiting a request from the client. Thereafter, process block 510 restores from common storage the client state data that had been saved earlier in process block 200 of the Server Request System Routine. Thereafter, process block 520 transfers control back to the client by passing control to the return address saved in the data restored from common storage.

After control passes back to the client, process block 130 may perform processing other than making a request to the server. Thereafter, the client may stop.

Returning now to decision block 210, if the Server is already started, then process block 230 locates in common storage the saved state and return address for the server. This saved state and return address for the server was previously saved uncommon storage by process block 500 of the Server Wait Service Routine. This saved state and return address is that of process block 410 of the server. Thereafter, process block 240 restores from common storage the server state and return address. Thereafter, process block 250 transfers control back to the server by passing control to the return address saved in the data restored from common storage. This results in control passing to process block 410 of the server. The server awakens after waiting on a request and processes the request for the client in process block 410. However, the server is executing under the same task as the client, as the Server Request System Routine that gave control to the server was also executing under the same task as the client.

After the server has processed the client request in process block 410, process block 420 calls the Server Wait Service Routine so that control may be passed back to the client and so that the server may wait on another client request.

This cycle of waiting for work and processing requests by the server may be continued over and over again until the server is terminated by an operator action, a termination request by the client, a termination of the operating environment, or another event causing termination of the server.

Response information from the server resulting from a client request may be passed back to the client as a parameter of the Server Wait Service Routine call. Alternatively, response information may be passed back to the client through the use of common storage.

In the above preferred embodiment, the server is implemented as a serially reusable resource. Therefore, the server may be in use by a first client and not be available immediately to a second client. In an alternative embodiment, existing event wait/post logic or queuing logic may be used to suspend the second client or queue the request from the second client until the server is free.

In yet another alternative embodiment, multiple active copies of a server may be executing simultaneously. If these multiple active copies share resources, then the sharing of these resources should be synchronized.

## Claims

**1** A method of providing a client / server architecture having a client and a server, said method comprising the steps of :
executing the client under a client task; and
executing the server under the client task.

**2** The method of claim 1, wherein the step of executing the client under a client task further comprises the steps of :
saving a state of the client; and
invoking the execution of the server under the client task.

**3.**The method of claim 1, wherein the step of executing the server under the client task further comprises the steps of :
saving a state of the server; and
transferring a program control back to the client.

**4.**The method of claim 2, wherein the state of the client is a state at which the client is awaiting a response from the server.

**5.**The method of claim 3, wherein the state of the server is a state at which the server is awaiting a request from the client.

**6.**An apparatus for providing a client / server architecture having a client and a server, said apparatus comprising :
means for executing the client under a client task; and
means for executing the server under the client task.

**7.**The apparatus of claim 6, wherein the means for executing the client under a client task further comprises :
means for saving a state of the client; and
means for invoking the execution of the server under the client task.

**8.**The apparatus of claim 6, wherein the means for executing the server under the client task further comprises :
means for saving a state of the server; and
means for transferring a program control back to the client.

**9.**The apparatus of claim 7, wherein the state of the client is a state at which the client is awaiting a response from the server.

**10.** The apparatus of claim 8, wherein the state of the server is a state at which the server is awaiting a request from the client.
